# EUROPEAN PATENT SPECIFICATION

(11) **EP 1 910 449 B1**
(45) Date of publication and mention of the grant of the patent: **18.12.2013**
(21) Application number: 06762602.8
(22) Date of filing: 14.07.2006
(51) Int. Cl.: C08J 3/205, C08J 3/05, C08K 9/04

(54) **AQUEOUS DISPERSION OF HYBRID PARTICLES CONSISTING OF ORGANIC OR INORGANIC PIGMENT PARTICLES AND ORGANIC NANO-PARTICLES AND PROCESS FOR PREPARING THE SAME**
WÄSSRIGE DISPERSION VON HYBRIDPARTIKELN BESTEHEND AUS ORGANISCHEN ODER ANORGANISCHEN PIGMENTPARTIKELN UND ORGANISCHEN NANOPARTIKELN, UND VERFAHREN ZU DEREN HERSTELLUNG
DISPERSION AQUEUSE DE PARTICULES HYBRIDES COMPOSEES DE PARTICULES DE PIGMENTS ORGANIQUES OU INORGANIQUES ET DE NANOPARTICULES ORGANIQUES ET PROCEDE DE PREPARATION CORRESPONDANT

(30) Priority: 02.08.2005 EP 05016756
(43) Date of publication of application: 16.04.2008
(73) Proprietor: Topchim N.V., 2160 Wommelgem (BE)
(72) Inventor: JÖNSON, Eric, B-2970 Schilde (BE); VAN DEN ABBEELE, Henk, Jan, Frans, B-3294 Diest (BE)
(74) Representative: Laenen, Bart Roger Albert
(86) International application number: PCT/EP2006/006922
(87) International publication number: WO 2007/014635

(56) References cited:
- WO-A1-2004/031249
- WO-A2-03/006511
- JP-A- 55 038 839

## Description

The invention relates to an aqueous dispersion of hybrid particles consisting of organic or inorganic pigment particles and organic nano-particles attached to the surface of the pigment particles, the nano-particies having a particle size between 2 and 200 nanometer. The invention further relates to a process for preparing such a dispersion to a coating composition for coating paper and similar material and to the use of the composition in coating paper and similar material.

In JP55038839 a white ink composition with improved dispersion stability, consisting of dispersed titanium oxide in the presence of a maleic anhydride copolymer has been described, but differs from the aqueous dispersion of the present invention in that said copolymer is not present as nano-particles connected to said titanium oxide.

In EP-A-1 422 248 an aqueous dispersion containing nano-particles has been described, which aqueous dispersion is used as a paper sizing composition, especially with the aim to improve the surface characteristics of the paper or the like. Also in W02004031249 and WO03006511 similar aqueous dispersions of hydrophobic polymers for use in paper processing and sizing are described.

However for applications on porous substrates such as e.g. paper, these nano-particles are not very effective as they have the tendency to disappear in the pores of the substrate during application, especially under high pressure of a blade or a roll. Mixing the nano-particles with a carrier of sufficient size, normally called pigment in this art, has not given any substantial improvement as the nano-particles still have the tendency to disappear in the pores of the substrate.

It is an object of the invention to provide an aqueous dispersion whereby these above mentioned problems can be avoided or at least the result can be improved.

This object is obtained by means of the aqueous dispersion according to claim 1.

By attaching the nano-particles to a bigger pigment-particle it has been obtained that the nano-particles are maintained at the surface level of the substrate as the pigment particle have such a size that they are not disappearing in the pores, but are kept close to the surface level of the substrate.

A process for obtaining such an aqueous dispersion in which the nano-particles are attached to the surface of the pigment particles consists of preparing the nano-particles in the presence of such pigment particles.

The smaller particles are to a large extend physically or chemically attached to the larger particles. It has been found that the produced nano-particles in the presence of larger particles have a smaller average size than when produced as such. As a result the hybrid particles have a very good stability in water, much better than a blend of the nano-particles with the larger particles. The hybrid particles further show a better adhesion to substrates like aluminium, in a coating formulation less binder is necessary, they provoke less dust formation after application and they give less settlement on the rolls during the application when compared with a blended composition of comparable materials. The hybrid particles have a hydrophobicity which is similar to the one of the nano-particles, while for the blended material the hydrophobicity is more an average of the blended materials. In case of styrene maleimide co-polymers (SMI) as nano-particles, its high hydrophobicity allows a high fraction of repulpable binder in its formulation without affecting the water fastness of the resultant paper. Furthermore, the resultant coatings have a better gloss and a lower coefficient of friction.

The hybrid particles according to the present invention can be obtained by dissolving a co-polymer of maleic anhydride with a vinyl monomer in water by adding a R-NH₂ compound, R being H, alkyl with 1-18 C-atoms or aryl, and to heat up the resultant mixture in the presence of larger particles to make the imides. The formed imides are hydrophobic and the polymeric particles will settle down on the larger particles.

The object of the invention is to provide a method with which a better quality dispersion can be obtained. This object is achieved according to the invention in that the aforementioned reaction is carried out in the presence of one or more organic or inorganic pigments, wherein the molar ratio of maleic anhydride monomeric units and R-NH₂ is between 1:0,8 and 1:5, the pH being set to a value of preferably 5 to 9 and the temperature to preferably 110-180°C, until a degree of imidisation of at least 35% preferably at least 50 %, is obtained.

The shear load and visco-elasticity are much lower during the imidisation phase if a carrier pigment is added. The SMI particles precipitated on the carrier may have a size varying between 2 and 200 nanometers but mostly between 2 and nanometers, and have an extremely monodispersive behaviour on the carrier pigment. The carrier pigment is always larger than the SMI, and for practical reasons it is limited from 500 nanometers to approx. 100 microns.

The reaction is preferably conducted at a pH of 5.5-8, the best results being obtained at a pH of 5.5-7.

For the temperature at which the reactions are carried out preference is given to 120-160°C, the best results being obtained at 140-150°C.

Although a product with a degree of imidisation of 20% already gives some results, dependent upon the hydrophobic characteristics of the compound R-NH₂ the reactions are preferably continued until a degree of imidisation of at least 35% is achieved, the best results being obtained at a degree of imidisation of 80% or more.

The invention relates in principle to the difficulty with which nano-particles of pure styrene-maleimide can be applied to substrates such as paper and others, where the nano-particles are always smaller than the initial porosity of the substrate. By allowing these nano-particles to precipitate during their formation onto another base pigment, the possibility is created of maintaining these nano-particles on the surface to the optimum degree, whilst the gloss, printability and colour reproduction of the paper are clearly improved. At the same time the costs are reduced since 70% less SMI is required to coat the same surface. Finally, the nano-particles are applied to an organic or inorganic substrate and the particles retain their non-film-forming properties. Even on very smooth, dense structures such as aluminium foil, positive results have been achieved. In the case of aluminium foils with low gram weights of approx. 6 gr/m², the number of pinholes could be substantially reduced by the application of the dispersion until complete elimination The latter means a considerable saving in the consumption of aluminium foils in packaging materials, since the same properties of steam tightness could only be obtained if aluminium foil with a gram weight of at least 12 g/m² was used. The term pigment as used in this description is a term normally used in paper industry for designating a filler material, and its meaning is not restricted to a colouring agent as such.

A dispersion, obtained by the method according to the invention, is applied in both coated (coater) and non-coated (film press) office/ and copy paper)coated and non-coated paper) and offset paper which can also be provided with a glossy layer. After application of the dispersion to the paper, use is made of a calander to provide the paper with a gloss effect. The pressure and the number of passages to obtain the same gloss as in traditionally produced paper are lower, with the result that the surface is less damaged and the strength of the paper is better retained. This also counteracts possible an uneven mottling absorption of ink. Another object of this invention is to a dispersion that is suitable for paper coating, the particles of which do not show any film formation during calandering, but whose structure is retained. This has a direct influence on gloss, particularly after printing.

Suitable pigments may be organic or inorganic. Examples of inorganic pigments include carbon black and titanium oxide. Examples of organic pigments include phthalocyanines, anthraquinones, perylenes, carbazoles, monoazo-and disazobenzimidazolones, isoindolinones, monoazonaphthosl, diarylidepyrazolones, rhodamines, indigoids, quinacridones, diazopyranthrones, dinitranilines, pyrazolones, dianisidines, pyranthrones, tetrachloroisoindolinones, dioxazines, monoazoacrylides, and anthrapyrimidines.

Commercial examples of organic pigments include those described in The Colour Index, Vols. 1-8, Society of Dyers and Colourists, Yorkshire, England; including, for example Pigment Blue 1, Pigment Blue 15, Pigment Blue 15:1, Pigment Blue 15:2, Pigment Blue 15:3, Pigment Blue 15:4, Pigment Blue 15:6, Pigment Blue 16, Pigment Blue 24, and Pigment Blue 60 (blue pigments); Pigment Brown 5, Pigment Brown 23, and Pigment Brown 25 (brown pigments); Pigment Yellow 3, Pigment Yellow 14, Pigment Yellow 16, Pigment Yellow 17, Pigment Yellow 24, Pigment Yellow 65, Pigment Yellow 73, Pigment Yellow 74, Pigment Yellow 83, Pigment Yellow 95, Pigment Yellow 97, Pigment Yellow 108, Pigment Yellow 109, Pigment Yellow 110, 5 Pigment Yellow 113, Pigment Yellow 128, Pigment Yellow 129, Pigment Yellow 138, Pigment Yellow 139, Pigment Yellow 150, Pigment Yellow 154, Pigment Yellow 156, and Pigment Yellow 175 (yellow pigments); Pigment Green 1, Pigment Green 7, Pigment Green 10, and Pigment Green 36 (green pigments); Pigment Orange 5, Pigment Orange 15, Pigment Orange 16, Pigment Orange 31, Pigment Orange 34, Pigment Orange 36, Pigment Orange 43, Pigment Orange 48, Pigment Orange 51, Pigment Orange 60, and Pigment Orange 61 (orange pigments); Pigment Red 4, Pigment Red 5, Pigment Red 7, Pigment Red 9, Pigment Red 22, Pigment Red 23, Pigment Red 48, Pigment Red 48:2, Pigment Red 49, Pigment Red 112, Pigment Red 122, Pigment Red 123, Pigment Red 149, Pigment Red 166, Pigment Red 168, Pigment Red 170, Pigment Red 177, Pigment 15 Red 179, Pigment Red 190, Pigment Red 202, Pigment Red 206, Pigment Red 207, and Pigment Red 224 (red pigments); Pigment Violet 19, Pigment Violet 23, Pigment Violet 37, Pigment Violet 32, and Pigment Violet 42 (violet pigments); and Pigment Black 6 or 7 (black pigments).

The organic pigment is preferably selected from kaolin, talcum, mica, clay, Al₂(OH)₃, bentonites, zeolites, glass pearls, CaCO₃, TiO₂, sepeolites, silica, zirconium oxide, iron oxide or mixtures thereof.

This produces a dispersion which after application to the paper has no film formation during calendaring of the coated paper, and whose particle structure is retained. A very high solid content is achieved, even exceeding 65%.

In the method according to the invention the initial polymer is dissolved in an aqueous solution of a compound with the general formula R-NH₂, where R is selected from the series H, alkyl with 1-18 C atoms and aryl. R is preferably hydrogen.

The initial polymer is also dissolved in the presence of a pigment or a mixture of pigments. During the imidisation reaction a dispersion aid may be added. Such a dispersion aid could e.g. be an alkali salt of styrene maleic anhydride copolymer.

The initial polymer with which the dispersion is prepared contains MZA monomeric units and vinyl monomers, preferably vinyl aromatic monomeric units. Suitable vinyl aromatic monomeric units are, for example, styrene and alpha methyl styrene. The initial polymer preferably contains styrene as monomeric units. Other vinyl monomers can be acrylates, methacrylates, ethylene, propylene, vinyl carbonate, vinyl acetate and mixtures thereof.

A copolymer containing vinyl aromatic monomeric units and MAA monomeric units can be prepared by known methods. An example of such a method for the preparation of a copolymer of MAA monomeric units and styrene is described by Hanson and Zimmerman, Ind. Eng. Chem., vol. 49, no. 11 (1957) pp. 1803-1807. The initial polymer preferably contains 22-50 mol% maleic acid anhydride monomeric units and 50-78 mol% styrene monomeric units. A dispersion can therefore be obtained from a polymer with a glass transition temperature of over 120°C, and the imidisation takes place relatively quickly.

The molecular weight of the initial polymer may vary within wide limits. An initial polymer preferably has a weighted average molecular weight of between 10,000 and 300,000 kg/kmol. Even more preference is given to a weighted average molecular weight of between 60,000 and 150, 000 kg/kmol. In this way a dispersion can be prepared with a relatively high solid content.

In the method according to the invention the initial polymer can, for example, be introduced into an autoclave together with an aqueous solution of NH3 or an amine, whereupon the temperature is raised to at least 140°C. The molar ratio of maleic acid anhydride (MAA) monomeric units and NH₃ or MAA and amine, is between 1:08 and 1:5, where as the pressure is so high that the aqueous solution will not boil.

The time required to imidise the MAA monomeric units in the initial polymer almost completely depends on the selected temperature, the reactor, the initial quantities and the like, and can be easily determined experimentally. The imidisation reaction can be stopped or at least substantially delayed by reducing the temperature to below 95°C.

In a preferred embodiment of the method the temperature is between 150 and 190°C because at this temperature a very well defined dispersion, in terms of properties and composition, with a high reproducibility, can be obtained. The molar ratio of maleic acid anhydride (MAA) monomeric units and NH₃ or MAA and amine is preferably approx. 1:1 as this results in the highest degree of conversion without the dispersion generating an unpleasant taste. Ammonia or an aliphatic amine is preferably used, which aliphatic amine is a primary amine.

Examples of suitable amines are butylamine and stearyl amine. One advantage of the method according to the invention is that a dispersion can be produced by the method with a solid content of over 65% by weight.

The invention also relates to an aqueous dispersion of a Hybrid pigment polymer which contains maleic acid anhydride (MAA) monomeric units and vinyl aromatic monomeric units, characterised in that the MAA is almost completely imidised and the dispersion has a solid content of over 65% by weight.

The Pigment/SMA ratio at the beginning of the reaction is ideally 70 parts of pigment to 30 parts of SMA, after converting to SMI. The maximum limit for these Hybrid pigment-polymer dispersions is approx. 99 parts of inorganic pigment to I part of SMI, and the minimum limit is 1 part of inorganic pigment to 99 parts of SMI.

The aqueous dispersion preferably has a polymer whose vinyl aromatic monomeric units are styrene and the glass transition temperature exceeds 160°C.

A further advantage of the dispersion according to the invention is that it has a relatively narrow particle size distribution.

The invention relates in particular to compositions for sized paper and pigmented film press paper, which contain the dispersion according to the invention.

Compositions for paper sizing contain not only a dispersion obtainable by the method according to the invention, but also one or more of the usual additives. The composition according to the invention is preferably characterised in that the composition may contain as additives both latex and starch. Other binders such as polyvinylalcohol, polyvinylacetate, Hybrone (a name of a product as sold by DSM, the Netherlands) and proteins can be used as well.

The quantity of dispersion which contains the composition is preferably such that the quantity of pigment-polymer, i.e. the dry weight of hybrid pigment-polymer particles in the dispersion, is between 0.2 and 90% by weight related to the dry weight of the other normal additives. More preferably a composition for paper sizing and coating contains between 80 and 90% by weight of Hybrid pigment-polymer particles related to the dry weight of starch or latex. A composition may, for example, be prepared by adding to the solution of the other additives in water a certain quantity of the dispersion according to the invention.

The invention will now be explained with reference to examples, but is in no way limited to them.

### EXAMPLES and COMPARATIVE EXPERIMENTS

### Characterisation methods

### Photon Correlation Spectroscopy-(PCS)

The mean hydrodynamic radius of the polymer particles was determined by means of Photon Correlation Spectroscopy (PCS). The measurements were carried out with a unit from ALV-Laser Vertriebsgesellschaft mbH in Langen, Germany (Coherent Innova 90 ion-argon laser; the blue line was used (488 nm), output 50 mW). The signal was collected by means of a photon-multiplier from Thorn-Emi, fitted to an ALVISP-86#053 laser goniometer (supply voltage of photon-multiplier approx. 1700 V, measuring angle 90°). The signal was processed by an ALV 5000 Multiple Tau digital correlator equipped with the ALV5000/E for Windows-software. The method of cumulant analysis is used to process the measured data, and the Stokes-Einstein relation is used to determine a hydrodynamic radius from the measured diffusion coefficient.

For the PCS measurement the samples were diluted in demineralised water previously filtered via a filter with filter openings having a diameter of 0.2 pm. The samples obtained after implementation of a method according to the embodiment were diluted 500 times (to a concentration of approx. 0.04% by weight of solid or stock), and the samples obtained after carrying out a Comparative Experiment were diluted 50 times to approx. 0.4% by weight of solid.

The measuring cell was flushed before the measurements with dust-free water, then three times with the sample solution to be measured. A number of samples deriving from the Comparative Experiments were unstable in water. To stabilise these samples a buffer was used with a pH 9 of 0. 02 (Titrisol from Merck) or a iü M aqueous NaOH solution. The results of the PCS measurements are indicated in the different tables.

### Solid content

The solid content (SC) was determined by means of an infrared dry/weighing unit of the type Mettler LP16/PM600. If there was any polymer remaining after the reaction it was filtered off via a paper filter (MN64Om medium retention and filtration speed from Macherey-Nagel, Germany) before the solid content was determined. If necessary filtration was carried out before this via a metal screen with screen holes 250 pm wide. The solid content of the resulting filtrates, bright in appearance, was then determined by the method known to the person skilled in the art.

### pH measurements

pH values were measured with a Knick 752 CI, no. 051489 pH meter. The pH meter was calibrated at 20°C with buffer solutions with a pH of 4.00 (citrate/HCl buffer), 7.00 and 9.00 respectively from Merck, and was fitted with a gas electrode (3M KCl). The pH of the samples was determined at 20°C. Samples from Comparative Experiments were diluted, if the solid content was higher and hence also the viscosity, to a solid content of approximately 10% by weight. Dispersions were not diluted.

### Determination of the degree of imidisation.

The degree of imidisation of the aqueous dispersions can be measured, for example, by means of Raman-FTIR spectroscopy by relating the intensity of absorptions to the intensity of the same absorptions measured for a fully imidised and fully de-imidised reference compound. Before calculations were carried out the signals were standardised to the absorption signals deriving from the aromate rings in the polymer chains. In the measurements carried out the following absorption bands were examined:
- C=O band of imides (approx. 1768 cm-1, relatively strong signal)
- C=O band of anhydrides (approx. 1860 cm-1)
- C=O band of acid groups (approx. 1715 cm-1, relatively weak signal). An aqueous ammonia solution of a polymer manufactured from 26 mol% maleic acid anhydride and 74 mol% styrene was used as the reference sample, which styrene was prepared with an NH₃:MAA mol ratio of 3:1, at 50°C (no imide groups) and an imidised SMA powder prepared by mixing 2 g SMA (28 % by weight MAA; 72% by weight of styrene; molecular weight 110,0000 kg/kmol) with 0.50 g of ureum in a double screw mini-extruder at 240°C for 5 minutes, at a speed of 100 revolutions per minute. The glass transition temperature of the imidised SMA powder was 193°C. The degree of imidisation calculated from the Raman absorptions corresponded closely to the degree of imidisation that can be calculated from the quantity of ammonia that was added to the reaction mixture in the preparation of the different dispersions.

### Example I (70 parts of kaolin to 30 parts of SMA) 50% dispersion

In a double wall oil heated reactor of I litre, in which a turbine agitator is placed, 442 grams of a 65% kaolin slurry (type SPS from IMERIS) are added, together with the make-up water, then topped up with 132 grams of crushed SMA. The SMA has an MAA content of 26% and a molecular weight of 80,000 kg/kmol, to which is added a 25% solution of NH₃ in an MAA;NH₃ ratio of 1:1. The temperature is brought to 160°C and the speed of the agitator to 200 rpm. The pressure in the reactor is approx. 6 bars. After 4 hours a Hybrid pigment polymer dispersion with a solid content of approx. 61 % by weight is formed with precipitated particles between 15 and 30 nm. The MAA in these particles is almost fully imidised. The Tg of the outermost layer of the Hybrid polymer pigment is between 185°C and 200°C Brookfield viscosity 23°C 100 rpm spindle 5-380 mPa/sec.
PH 5.8

There is a high dispersion on paper surface (EMS 75000X). After film press application on a 90g/m2 base paper The kaolin plates are fully covered and coated with precipitated SMI nano-particles.

### Example II (70 parts of AlO3H and 30 parts of SMA) 50% dispersion

In a double wall oil heated reactor of 1 litre, in which a turbine agitator is placed, 203 grams of a 65% kaolin slurry (type SPS from IMERIS) are added, together with the make-up water,with 203 grams of Al(OH)₃, then topped up with 122 grams of crushed SMA. The SMA has an MAA content of 26% and a molecular weight of 80,000 kg/kmol, to which is added a 25% solution of NH₃ in an MAA;NH₃ ratio of 1:1. Furthermore, a potassium salt of an SMA can be added as dispersing agent with a molecular weight of 1000 kg/kmol, with an MAA content of 48% (in this case it is not added). The K-salt:SMA ratio = 0.03:1. The temperature is brought to 160°C and the speed of the agitator to 200 rpm. The pressure in the reactor is approx. 6 bars. After 4 hours a Hybrid pigment polymer dispersion with a solid content of approx. 52% by weight is formed with precipitated particles between 10 and 25 nm. The MAA in these particles is almost fully imidised. The Tg of the outermost layer of the Hybrid polymer pigment is between 185°C and 200°C
Brookfield viscosity 23°C 100 rpm spindle 5-60 mPa/sec.
PH 6.11.
The MAA in these particles is almost fully imidised (99%). The Tg of the polymer is between 185 and 200°C, 200 °C, pH between 5 and 9.

The dispersions from both examples display no film-forming properties if they applied to paper either with a blade or film press.

### Comparative Experiment A

A dispersion has been prepared using a mixture comprising on the one hand a dispersion of the reaction product of SMA and NH₃ in the same ratio as described in example I and kaolin.

From a visualization of the particles it is clear that most pigment particles are not coated with the SMI-or MAA-particles but that these particles are much smaller and do not cover completely the surface of the carrier. Part of the SMI-or MAA-particles has disappeared in the pores of the carrier and part of the SMI-or MAA-particles is covered by pigment particles thereby rendering them ineffective.
The influence of the degree of imidisation is shown in the top layer prepared in accordance with example I in which the imidisation has been stopped at approximately 80% or approximately 30%.

From the pictures (data not shown) it is evident that at a lower imidisation degree the pigment particles are less covered and the SMI-or MAA-particles are less present at the surface.

## Claims

1. An aqueous dispersion of hybrid particles consisting of inorganic or organic pigment particles and organic nano-particles attached to the surface of the pigment particles, the nano-particles having a particle size between 2 and 200 nanometers.

2. An aqueous dispersion according to claim 1, **characterized in that** the nano-particles have a glass transition temperature of at least 120°C.

3. An aqueous dispersion according to claim 1 or 2, **characterized in that** the nano-particles comprises co-polymers of vinyl monomers and a mixture comprising maleic anhydride and derivates of maleic anhydride.

4. An aqueous dispersion according to anyone of the claims 1-3, **characterized in that** the inorganic pigment particles are selected from the group consisting of clay, talcum, kaoline, glass, TiO₂, zeolites, CaCO₃, mica, Al(OH)₃, silica, zirconiumoxide or mixtures thereof.

5. An aqueous dispersion according to claim 3, **characterized in that** at least 50 % by weight preferably 80 % by weight of the mixture comprising maleic anhydride and derivates of maleic anhydride is formed by maleimide.

6. An aqueous dispersion according to anyone of the claims 1 - 5, **characterized in that** the nano-particles have a particle size between 5 and 30 nanometer.

7. An aqueous dispersion according to claim 6 **characterized in that** at least 85 % of the nano-particles has a particle size between 5 and 10 nanometer.

8. A process for preparing an aqueous dispersion according to anyone of the claims 1-7, **characterized in that**, a copolymer of vinyl monomers and maleic anhydride is treated in water and in the presence of one or more inorganic pigment particles, with a compound having the general formula R-NH₂ of which R is H, alkyl with 1 to 18 C-atoms or aryl, wherein the molar ratio of maleic anhydride monomeric units and R-NH₂ is between 1:0,8 and 1:5, the pH being set to a value of preferably 5 to 9 and the temperature to preferably 110-180°C, until a degree of imidisation of at least 35% is obtained, and wherein the size of the pigment particles is from 500 nm to about 100 microns.

9. A process according to claim 8 **characterized in that** the reaction is taking place until at least 50 % preferably at least 80 % of the maleic anhydride groups are transformed in imide groups.

10. A process according to claim 8 or 9 **characterized in that** the pH is regulated between 5,5 and 8, preferably between 5,5 and 7.

11. A process according to any-one of the claims 8 - 10, **characterized in that** the temperature is regulated between 120 and 160°C preferably between 140 - 150°C, until the required number of imide-groups has been formed.

12. A process according to any-one of the claims 8 - 11, **characterized in that** the copolymer contains 10 - 50 molar % of monomer units of maleic anhydride and 50 - 90 % moles % of vinyl monomers.

13. A process according to any-one of the claims 8 - 12 **characterized in that** the vinyl monomer is styrene.

14. A process according to claim 13, **characterized in that** copolymer contains 15-50 molar % of maleic anhydride, preferably 22 - 36 molar %, and 50 - 85 molar % of styrene, preferably 64 - 78 molar %.

## Patentansprüche

1. Eine wässrige Dispersion hybrider Partikel, die aus anorganischen oder organischen Pigmentpartikeln sowie organischen Nanopartikeln besteht, welche auf die Oberfläche der Pigmentpartikel fixiert wurden, wobei die betreffenden Nanopartikel eine Größe von 2 bis 200 Nanometer haben.

2. Eine wässrige Dispersion nach Anspruch 1, **dadurch gekennzeichnet, dass** die betreffenden Nanopartikel eine Verglasungstemperatur von mindestens 120°C aufweisen.

3. Eine wässrige Dispersion nach Anspruch 1 oder 2, **dadurch gekennzeichnet, dass** die betreffenden Nanopartikel aus Copolymeren von Vinylmonomeren sowie aus einer Mischung von Maleinsäureanhydrid und Derivaten von Maleinsäureanhydrid bestehen.

4. Eine wässrige Dispersion nach einem der Ansprüche 1 bis 3, **dadurch gekennzeichnet, dass** die anorganischen Pigmentpartikel - jeweils ausschließlich oder in einer Mischung - aus Ton, Talkum, Kaolin, Glass, TiO₂, Zeolith, CaCO₃, Glimmer, Al(OH)₃, Siliziumoxid oder Zirkoniumoxid bestehen.

5. Eine wässrige Dispersion nach Anspruch 3, **dadurch gekennzeichnet, dass** mindestens 50 Gewichtsprozent der aus Maleinsäureanhydrid sowie aus Derivaten von Maleinsäureanhydrid bestehenden Mischung - vorzugsweise 80 % - auf Maleimid entfallen.

6. Eine wässrige Dispersion nach einem der Ansprüche 1 bis 5, **dadurch gekennzeichnet, dass** die betreffenden Nanopartikel eine Partikelgröße von 5 bis 30 Nanometer aufweisen.

7. Eine wässrige Dispersion nach Anspruch 6, **dadurch gekennzeichnet, dass** mindestens 85 % der betreffenden Nanopartikel eine Partikelgröße von 5 bis 10 Nanometer aufweisen.

8. Ein Verfahren zur Herstellung einer wässrigen Dispersion nach einem der Ansprüche 1 bis 7, **dadurch gekennzeichnet, dass** ein Copolymer von Vinylmonomeren und Maleinsäureanhydrid in Wasser und in Anwesenheit von mindestens einem anorganischen Pigment mit einer Verbindung der generellen Formel R-NH₂ behandelt wird, (deren R gleich H ist, ein Alkyl mit 1 bis 18 C-Atomen oder ein Aryl), wobei das Molverhältnis zwischen den Monomereinheiten des Maleinsäureanhydrids und R-NH₂ zwischen 1:0,8 und 1:5 beträgt, der pH-Wert vorzugsweise auf eine Größe zwischen 5 und 9 festgelegt wird, die Temperatur vorzugsweise so lange im Bereich zwischen 110 und 180°C liegt, bis ein Imisidierungsgrad von mindestens 35 % erreicht worden ist, und wobei die betreffenden Pigmentpartikel eine Größe von 500 Nanometer bis etwa 100 Mikrometer haben.

9. Ein Verfahren nach Anspruch 8, **dadurch gekennzeichnet, dass** die Reaktion so lange stattfindet, bis mindestens 50 % - vorzugsweise mindestens 80 % - der Maleinsäureanhydridgruppen zu Imidgruppen transformiert worden sind.

10. Ein Verfahren nach Anspruch 8 oder 9, **dadurch gekennzeichnet, dass** der pH-Wert auf eine Größe zwischen 5,5 und 8 - vorzugsweise zwischen 5,5 und 7 - festgelegt wird.

11. Ein Verfahren nach einem der Ansprüche 8 bis 10, **dadurch gekennzeichnet, dass** die Temperatur so lange auf einen Wert zwischen 120 und 160°C - vorzugsweise zwischen 140 und 150°C - festgelegt wird, bis sich die erforderliche Zahl von Imidgruppen gebildet hat.

12. Ein Verfahren nach einem der Ansprüche 8 bis 11, **dadurch gekennzeichnet, dass** zwischen 10 und 50 % der Copolymer-Stoffmenge (Mol) auf Monomereinheiten des Maleinsäureanhydrids und zwischen 50 und 90 auf Vinylmonomere entfallen.

13. Ein Verfahren nach einem der Ansprüche 8 bis 12, **dadurch gekennzeichnet, dass** es sich bei dem Vinylmonomer um Styren handelt.

14. Ein Verfahren nach Anspruch 13, **dadurch gekennzeichnet, dass** zwischen 15 und 50 % - vorzugsweise zwischen 22 und 36 % - der Copolymer-Stoffmenge (Mol) auf Maleinsäureanhydrid und zwischen 50 und 85 % - vorzugsweise zwischen 64 und 78 % - auf Styren entfallen.

## Revendications

1. Une dispersion aqueuse de particules hybrides qui consiste en particules de pigments inorganiques ou organiques et en nanoparticules attachées, les nanoparticules ayant une taille de particule entre 2 et 200 nanomètres.

2. Une dispersion aqueuse selon la revendication1, **caractérisée par le fait que** les nanoparticules ont une température de transition vitreuse d'au moins 120 °C.

3. Une dispersion aqueuse selon les revendications 1 ou 2, **caractérisée par le fait que** les nanoparticules comprennent des copolymères de monomère vinylique et un mélange d'anhydride maléique et de dérivés d'anhydride maléique.

4. Une dispersion aqueuse selon n'importe laquelle des revendications 1-3,**caractérisée par le fait que** les particules de pigment inorganiques sont sélectionnées dans le groupe consistant en argile, talc, kaolin, verre, TiO₂, zéolites, CaCO₃, mica, Al(OH)₃, silice, zirconium oxide ou des mélanges de ceux-ci.

5. Une dispersion aqueuse selon la revendication 3, **caractérisée par le fait qu'**au moins 50 % du poids, de préférence 80 % du poids du mélange comprenant l'anhydride maléique et les dérivés d'anhydride maléique sont formés de maléimide.

6. Une dispersion aqueuse selon n'importe laquelle des revendications 1 - 5, **caractérisée par le fait que** les nanoparticules ont une taille de particule d'entre 5 et 30 nanomètres.

7. Une dispersion aqueuse selon la revendication 6 est **caractérisée par le fait que** 85 % des nanoparticules ont une taille de particule entre 5 et 10 nanomètres.

8. Un processus pour préparer une dispersion aqueuse selon n'importe laquelle des revendications 1-7, **caractérisé par le fait que**, un copolymère de monomères vinyliques et un anhydride maléique sont traités dans l'eau et en présence d'une ou plusieurs particules de pigments organiques, avec un composé ayant la formule générale R-NH₂ dans laquelle R est H, l'alkyle avec 1 à 18 atomes C- ou de l'aryle, alors que le rapport molaire des unités monomériques d'anhydride maléique et R-NH₂ se situe entre 1:0,8 et 1:5, le pH étant établi à une valeur de préférence entre 5 à 9 et la température de préférence à 110-180 °C, jusqu'à obtenir un degré d'imidisation d'au moins 35 % , et où la taille des particules est de 500 nm à environ 100 microns.

9. Un processus selon la revendication 8 **caractérisé par le fait que** la réaction a lieu au moins 50 % de préférence, au moins 80 % des groupes d'anhydride maléique qui sont transformés en groupes imides.

10. Un processus selon la revendication 8 ou 9 **caractérisée par le fait que** le pH est règlementé entre 5,5 et 8, de préférence entre 5,5 et 7.

11. Un processus selon n'importe laquelle des revendications 8 - 10, **caractérisé par le fait que** la température est réglée entre 120 et 160 °C de préférence entre 140 - 150 °C, jusqu'à ce que le nombre requis de groupes imides soit formé.

12. Un processus selon n'importe laquelle des revendications 8 - 11, **caractérisé par le fait que** les copolymères contiennent 10 - 50 % en moles d'unités d'anhydride maléique et 50 - 90 % en moles de monomères vinyliques.

13. Un processus selon n'importe laquelle des revendications 8 - 12 **caractérisé par le fait que** le monomère vinylique est du styrène.

14. Un processus selon la revendication 13, **caractérisé par le fait que** le copolymère contient 15-50 % en mole d'anhydride maléique, de préférence 22 - 36 % en mole, et 50 - 85 % en mole % de styrène, de préférence 64 - 78 % en mole.
